(19) Europäisches Patentamt / European Patent Office / Office européen des brevets

(11) **EP 4 718 617 A1**

(12) **EUROPEAN PATENT APPLICATION**
published in accordance with Art. 153(4) EPC

(43) Date of publication:
01.04.2026 Bulletin 2026/14

(21) Application number: 24810202.2

(22) Date of filing: 07.05.2024

(51) International Patent Classification (IPC):
$H01M\ 50/457$ (2021.01)   $H01M\ 50/491$ (2021.01)
$H01M\ 10/0525$ (2010.01)

(52) Cooperative Patent Classification (CPC):
Y02E 60/10

(86) International application number:
PCT/CN2024/091477

(87) International publication number:
WO 2024/239955 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.05.2023 CN 202310581239

(71) Applicant: Ningde Amperex Technology Limited
Ningde, Fujian 352100 (CN)

(72) Inventors:
• XIONG, Changchuan
  Ningde, Fujian 352100 (CN)
• WEI, Zengbin
  Ningde, Fujian 352100 (CN)
• FENG, Bo
  Ningde, Fujian 352100 (CN)

(74) Representative: Dehns Germany Partnerschaft mbB
Theresienstraße 6-8
80333 München (DE)

(54) **SEPARATOR, ELECTROCHEMICAL APPARATUS, AND ELECTRONIC DEVICE**

(57) This application discloses a separator, an electrochemical device, and an electronic device. The separator includes a separator substrate, a first coating layer, and a second coating layer. The separator substrate includes a first surface and a second surface disposed opposite to each other. The first surface faces a positive electrode, and the second surface faces a negative electrode. The first coating layer is disposed on the first surface, and the second coating layer is disposed on the second surface. The first coating layer is a dense solid filler coating. A porosity of the first coating layer is denoted as $D_1$, satisfying: $10\% \leq D_1 < 30\%$. The second coating layer is a high-porosity solid filler coating. A porosity of the second coating layer is denoted as $D_2$, satisfying: $30\% \leq D_2 \leq 60\%$. By disposing two coating layers of different performance parameters on two sides of the separator, this application improves the cycle performance, low-temperature discharge performance, and heat resistance of the battery.

FIG. 1

**Description**

**TECHNICAL FIELD**

This application relates to the technical field of batteries, and in particular, to a separator, an electrochemical device, and an electronic device.

**BACKGROUND**

A separator is a key component of a battery. Currently, the separators used in conventional lithium-ion batteries mainly include a polypropylene (PP) porous film, a polyethylene (PE) porous film, or a polypropylene (PP)/polyethylene (PE)/polypropylene (PP) composite porous film. However, with the enhanced kinetic performance of battery cells, the increase in the demand for negative electrode electrolyte solution (EL), the increase in the voltage of the positive electrode material, and the decline in the stability of the positive electrode material, the amount of substances dissolved out of the positive electrode is increasing, and in turn, the cycle performance of the battery is deteriorating.

**SUMMARY**

In view of the above situation, this application provides a separator, an electrochemical device, and an electronic device. Two coating layers of different porosities are disposed on two sides of the separator respectively. By controlling the porosities of the two coating layers to fall within an appropriate range, this application achieves a synergistic effect to improve the cycle performance of the battery.

According to a first aspect, this application provides a separator. The separator includes a separator substrate, a first coating layer, and a second coating layer. The separator substrate includes a first surface and a second surface disposed opposite to each other. The first surface faces a positive electrode, and the second surface faces a negative electrode. The first coating layer is disposed on the first surface, and the second coating layer is disposed on the second surface. The first coating layer is a solid filler coating. A porosity of the first coating layer is denoted as $D_1$, satisfying: $10\% \leq D_1 < 30\%$. The second coating layer is a solid filler coating. A porosity of the second coating layer is denoted as $D_2$, satisfying: $30\% \leq D_2 \leq 60\%$. The solid filler coating is a coating layer doped with solid particulate matters. In this application, a dense first coating layer and a high-porosity second coating layer are disposed on the outer surfaces of the separator substrate on the two sides respectively. The dense first coating layer helps to block a positive electrode dissolution product from entering internal pores of the separator substrate or even entering the negative electrode. In this application, the positive electrode dissolution product mainly means a product dissolved out from a positive electrode plate, specifically, metal elements such as Co, Mn, Ni, and Al that may be dissolved out from an active material, and small-molecular-weight polyacrylic acid (PAA) and uncrosslinked acrylate molecules that may be dissolved out from an auxiliary material such as a binder. On the one hand, controlling the porosity of the first coating layer to fall within an appropriate range can facilitate shuttling of the positive electrode dissolution product between the positive electrode and the negative electrode, and in turn, restrict the positive electrode dissolution product from participating in electrochemical reactions. On the other hand, a relatively low and appropriate porosity of the first coating layer synergizes with the relatively high porosity of the second coating layer, thereby helping to improve the cycle performance of the battery cell, especially, improving the high-temperature cycle performance of the battery cell significantly. In some embodiments, the porosity satisfies: $15\% \leq D_1 \leq 25\%$. In some embodiments, the porosity satisfies: $40\% \leq D_2 \leq 50\%$.

In some embodiments, an average volume pore diameter $D_{50}$ of the first coating layer is 1 nm to 90 nm. Setting the pore diameter $D_{50}$ of the first coating layer to fall within an appropriate range is more conductive to improving the cycle performance of the battery cell. In some embodiments, the pore diameter $D_{50}$ of the first coating layer is 5 nm to 60 nm.

In some embodiments, a thickness of the first coating layer is 20 nm to 500 nm. By controlling the thickness of the first coating layer to fall within the above range, on the one hand, the thickness can favorably synergize with the pore diameter $D_{50}$ and the porosity $D_1$ of the first coating layer to construct a pore channel capable of sifting on a positive electrode side of the separator. The pore channel more effectively blocks the positive electrode dissolution product from entering the internal pores of the separator or even the negative electrode, thereby being more conducive to improving the high-temperature cycle performance of the battery cell. On the other hand, the above setting also prevents positive electrode particles from piercing the separator. In some embodiments, a thickness of the first coating layer is 200 nm to 500 nm.

In some embodiments, a pore diameter $D'_{50}$ of the second coating layer is 100 nm to 500 nm. Setting the pore diameter $D'_{50}$ of the second coating layer to fall within an appropriate range improves the rate of the electrolyte solution in infiltrating the negative electrode. In some embodiments, the pore diameter $D'_{50}$ of the second coating layer is 150 nm to 300 nm.

In some embodiments, a pore diameter satisfies: $20 \leq D'_{50}/D_{50} \leq 60$. This setting further improves the heat resistance of the separator.

In some embodiments, a thickness of the second coating layer is 0.5 $\mu$m to 2 $\mu$m. By controlling the thickness of the second coating layer to fall within the above range, the thickness can synergize with the pore diameter $D'_{50}$ and the porosity $D_2$ of the second coating layer to construct a electrolyte-philic channel on the negative electrode side of the separator, thereby improving the transport channel of the electrolyte solution in the coating layer, further improving the efficiency of transporting the electrolyte solution in the negative electrode, improving the kinetic performance of the battery cell, and in turn, alleviating the interface lithium plating caused by purple specks generated for lack of the electrolyte solution on the negative electrode. In some embodiments, a thickness of the second coating layer is 0.5 $\mu$m to 1 $\mu$m.

In some embodiments, a sum of lithium-ion resistances of the first coating layer and the second coating layer is 0.001 $\Omega$ to 0.015 $\Omega$. At low temperature, the overall kinetic performance of the electrolyte system is relatively low (the lithium-ion transfer efficiency decreases). By lowering the resistance of the separator to an appropriate range, the lithium ion transfer resistance is lowered, and the transfer efficiency is improved, thereby improving the low-temperature discharge performance of the battery cell. In some embodiments, a sum of lithium-ion resistances of the first coating layer and the second coating layer is 0.001 $\Omega$ to 0.01 $\Omega$.

In some embodiments, the porosity ratio satisfies: $2.3 \leq D_2/D_1 \leq 3.2$. By further controlling the porosity ratio between the first coating layer and the second coating layer to fall within the above range and setting an appropriate pore diameter ratio synergistically, this application enables the ceramic coating layer to possess superior mechanical properties at high temperature, thereby suppressing heat shrink of the separator substrate, and improving the heat resistance of the separator.

According to a second aspect, this application provides an electrochemical device. The electrochemical device includes a positive electrode plate, a negative electrode plate, and a separator disposed between the positive electrode plate and the negative electrode plate. The separator may be the separator disclosed in any one of the above technical solutions.

According to a third aspect, this application provides an electronic device. The electronic device includes the electrochemical device.

## BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person skilled in the art may derive other drawings from such drawings without making any creative effort.

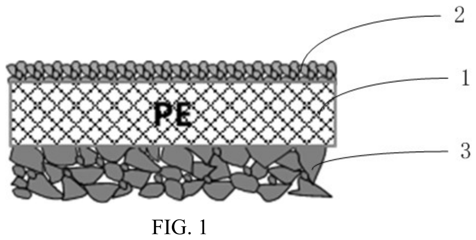

FIG. 1 is a schematic structural diagram of a separator prepared according to an embodiment of this application.

List of reference numerals: 1. separator substrate; 2. first coating layer; 3. second coating layer.

## DETAILED DESCRIPTION OF EMBODIMENTS

To make the objectives, technical solutions, and advantages of this application clearer, the following describes this application in further detail with reference to drawings and embodiments. Understandably, the specific embodiments described herein are merely intended to explain this application, but are not intended to limit this application.

### Electrochemical device

This application provides an electrochemical device. The electrochemical device includes a positive electrode plate, a negative electrode plate, a separator, and an electrolyte solution. The separator is disposed between the positive electrode plate and the negative electrode plate.

### Separator

The separator includes a separator substrate, a first coating layer, and a second coating layer. The separator substrate includes two surfaces disposed opposite to each other in a thickness direction of the substrate, that is, a first surface and a second surface. The first surface faces a positive electrode, and the second surface faces a negative electrode. The first coating layer is disposed on the first surface, and the second coating layer is disposed on the second surface. The first coating layer is a dense solid filler coating layer. A porosity of the first coating layer is denoted as $D_1$, satisfying: $10\% \leq D_1 < 30\%$. As an example, the porosity $D_1$ of the first coating layer is 10%, 13%, 15%, 17%, 20%, 25%, 27%, 29%, or a value falling within a range formed by any two thereof. Further, in some embodiments, the porosity satisfies: $15\% \leq D_1 \leq 25\%$.

The second coating layer is a high-porosity solid filler coating. A porosity of the second coating layer is denoted as

$D_2$, satisfying: $30\% \leq D_2 \leq 60\%$. As an example, the porosity $D_2$ of the second coating layer is 30%, 35%, 40%, 45%, 50%, 55%, 60%, or a value falling within a range formed by any two thereof. Further, in some embodiments, the porosity satisfies: $40\% \leq D_2 \leq 50\%$.

In some embodiments, a pore diameter $D_{50}$ of the first coating layer is 1 nm to 90 nm. As an example, the pore diameter $D_{50}$ of first coating layer is 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, or a value falling within a range formed by any two thereof. Further, in some embodiments, the pore diameter $D_{50}$ of the first coating layer is 5 nm to 60 nm.

In some embodiments, a thickness of the first coating layer is 20 nm to 500 nm. As an example, the thickness of the first coating layer is 20 nm, 40 nm, 50 nm, 60 nm, 80 nm, 100 nm, 150 nm, 200 nm, 220 nm, 240 nm, 260 nm, 280 nm, 300 nm, 340 nm, 350 nm, 380 nm, 400 nm, 450 nm, 500 nm, or a value falling within a range formed by any two thereof. Further, in some embodiments, the thickness of the first coating layer is 200 nm to 500 nm.

In some embodiments, a pore diameter $D'_{50}$ of the second coating layer is 100 nm to 500 nm. As an example, the pore diameter $D'_{50}$ of the second coating layer is 100 nm, 120 nm, 140 nm, 150 nm, 160 nm, 180 nm, 200 nm, 220 nm, 240 nm, 260 nm, 280 nm, 300 nm, 350 nm, 400 nm, 450 nm, 500 nm, or a value falling within a range formed by any two thereof. Further, in some embodiments, the pore diameter $D'_{50}$ of the second coating layer is 150 nm to 300 nm.

In some embodiments, a thickness of the second coating layer is 0.5 $\mu$m to 2 $\mu$m. As an example, the thickness of the second coating layer is 0.5 $\mu$m, 0.6 $\mu$m, 0.7 $\mu$m, 0.8 $\mu$m, 0.9 $\mu$m, 1 $\mu$m, 1.5 $\mu$m, 2 $\mu$m, or a value falling within a range formed by any two thereof. Further, in some embodiments, the thickness of the second coating layer is 0.5 $\mu$m to 1 $\mu$m.

In some embodiments, a sum of lithium-ion resistances of the first coating layer and the second coating layer is 0.001 $\Omega$ to 0.015 Q. In some embodiments, the sum of lithium-ion resistances of the first coating layer and the second coating layer is 0.001 $\Omega$, 0.003 $\Omega$, 0.005 $\Omega$, 0.008 $\Omega$, 0.01 $\Omega$, 0.013 $\Omega$, 0.015 $\Omega$, or a value falling within a range formed by any two thereof. Further, in some embodiments, the sum of lithium-ion resistances of the first coating layer and the second coating layer is 0.001 $\Omega$ to 0.01 $\Omega$.

In some embodiments, a pore diameter satisfies: $20 \leq D'_{50}/D_{50} \leq 60$. As an example, the $D'_{50}/D_{50}$ ratio may be 20, 25, 30, 35, 40, 45, 50, 55, 60, or a value falling within a range formed by any two thereof.

In some embodiments, the porosity of the first coating layer is denoted as $D_1$, and the porosity of the second coating layer is denoted as $D_2$, satisfying: $2.3 \leq D_2/D_1 \leq 3.2$. As an example, the $D_2/D_1$ ratio may be 2.3, 2.4, 2.5, 2.6, 2.7, 2.8, 2.9, 3.0, 3.1, 3.2, or a value falling within a range formed by any two thereof.

In some embodiments, the first coating layer and the second coating layer include a solid filler, a binder, and a wetting agent. In the first coating layer, the mass ratio between the solid filler, the binder, and the wetting agent is (96.5 to 99.3)%: (0.5 to 3)%: (0.2 to 0.5)%. In the second coating layer, the mass ratio between the solid filler, the binder, and the wetting agent is (94.5 to 99.3)%: (0.5 to 5)%: (0.2 to 0.5)%.

In some embodiments, in the first coating layer, an average volume particle diameter $d_{50}$ of the solid filler ranges from 10 nm to 200 nm. As an example, the particle diameter $d_{50}$ of the solid filler is 10 nm, 15 nm, 20 nm, 40 nm, 60 nm, 80 nm, 100 nm, 150 nm, 180 nm, 200 nm, or a value falling within a range formed by any two thereof. Further, in some embodiments, in the first coating layer, the particle diameter $d_{50}$ of the solid filler ranges from 20 nm to 100 nm.

In some embodiments, in the second coating layer, a particle diameter $d'_{50}$ of the solid filler ranges from 200 nm to 1000 nm. As an example, the particle diameter $d'_{50}$ of the solid filler is 200 nm, 250 nm, 300 nm, 400 nm, 450 nm, 500 nm, 600 nm, 700 nm, 800 nm, 900 nm, 1000 nm, or a value falling within a range formed by any two thereof. Further, in some embodiments, in the second coating layer, the particle diameter $d'_{50}$ of the solid filler ranges from 250 nm to 500 nm.

In some embodiments, the solid filler is at least one selected from boehmite, aluminum oxide, zirconium oxide, titanium dioxide, magnesium oxide, mullite, silicon carbide, silicon nitride, boron nitride, aluminum nitride, poly(p-phenylene terephthalamide), or polyimide. The binder is at least one selected from polyvinyl alcohol (PVA), hydroxymethyl cellulose, styrene-butadiene rubber (SBR), or polyacrylate ester. The wetting agent is at least one selected from polyoxyethylene alkylphenol ether, polyoxyethylene fatty alcohol ether, poly(oxyethylene-b-oxypropylene), or polyether modified trimethyl siloxane.

In some embodiments, a thickness of the separator substrate is 2 $\mu$m to 7 $\mu$m. As an example, the thickness of the separator substrate is 2 $\mu$m, 3 $\mu$m, 4 $\mu$m, 5 $\mu$m, 6 $\mu$m, 7 $\mu$m, or a value falling within a range formed by any two thereof.

In some embodiments, the separator substrate may be a non-woven fabric, a film, or a composite film that each assume a porous structure. The material of the separator substrate may include at least one of polyethylene, polypropylene, polyethylene terephthalate, or polyimide.

An exemplary method for preparing a separator is as follows:

(1) Preparing a first coating layer

Exemplarily: Step a: Mixing deionized water, a solid filler, a binder, and a wetting agent, where the solid filler, the binder, and the wetting agent are mixed at a mass ratio of (96.5 to 99.3)%: (0.5 to 3)%: (0.2 to 0.5)% (excluding the deionized water as a dispersing medium); and dispersing the constituents in an agitator homogeneously enough to obtain a slurry A to be applied; and step b: Applying the slurry A in step a onto a first surface of the separator substrate homogeneously, and oven-drying the slurry to complete preparation of a first coating layer.

(2) Preparing a second coating layer

Exemplarily: Step c: Mixing deionized water, a solid filler, a binder, and a wetting agent, where the solid filler, the binder, and the wetting agent are mixed at a mass ratio of (94.5 to 99.3)%: (0.5 to 5)%: (0.2 to 0.5)% (excluding the deionized water as a dispersing medium); and dispersing the constituents in an agitator homogeneously enough to obtain a slurry B to be applied; and step d: Applying the slurry B in step c onto a second surface of the separator substrate homogeneously, and oven-drying the slurry to complete preparation of a second coating layer to obtain a separator.

**Other components**

The positive electrode plate includes a positive current collector and a positive active material layer applied onto at least one surface of the positive current collector. The positive active material in the positive active material layer may be one or more compounds selected from lithium cobalt oxide, lithium nickel oxide, lithium manganese oxide, lithium nickel manganese oxide, lithium nickel cobalt manganese oxide, lithium nickel cobalt aluminum oxide, or lithium iron phosphate, or a compound formed by adding another transition metal or non-transition metal into any one of such compounds. As an example, the positive current collector may be made of a metal foil or a porous metal sheet or another material, for example, a foil or porous plate made of a metal such as aluminum, copper, nickel, titanium, or iron, or an alloy thereof, such as an aluminum foil.

The positive electrode plate may be prepared by a conventional method in this field.

The negative electrode plate includes a negative current collector and a negative active layer disposed on a surface of the negative current collector. The negative active layer includes a negative active material. The thickness of the negative active layer is not particularly limited herein as long as the objectives of this application can be achieved. For example, the thickness of the negative active layer is 30 $\mu$m to 120 $\mu$m. In some embodiments, the negative active material may include at least one of a carbon material or a silicon-based material. In some embodiments, the carbon material includes, but is not limited to, at least one of natural graphite, artificial graphite, mesocarbon microbeads, hard carbon, or soft carbon. In some embodiments, the silicon-based material includes, but is not limited to, at least one of silicon, a silicon-oxygen composite material, or a silicon-carbon composite material. The negative current collector is not particularly limited herein, as long as the objectives of this application can be achieved. For example, the negative current collector may include copper foil, copper alloy foil, nickel foil, stainless steel foil, titanium foil, foamed nickel, foamed copper, or a composite current collector (for example, a composite current collector formed by a metal-clad polymer), or the like. The thickness of the negative current collector is not particularly limited herein as long as the objectives of this application can be achieved. For example, the thickness of the negative current collector is 5 $\mu$m to 12 $\mu$m. The negative active layer may further include a binder and a thickener. The types of the binder and thickener are not particularly limited herein, as long as the objectives of this application can be achieved. For example, the binder may include, but is not limited, to at least one of polyvinyl alcohol, polyvinyl chloride, carboxylated polyvinyl chloride, polyvinyl fluoride, polyvinylpyrrolidone, polyurethane, polytetrafluoroethylene, polyvinylidene difluoride, styrene-butadiene rubber, or acrylated styrene-butadiene rubber. The thickener may include, but is not limited to, at least one of sodium carboxymethyl cellulose or lithium carboxymethyl cellulose. The negative active layer may further include a conductive agent. The type of the conductive agent is not particularly limited herein, as long as the objectives of this application can be achieved. For example, the conductive agent may include, but is not limited to, at least one of conductive carbon black, carbon nanotubes (CNTs), carbon fibers, Ketjen black, graphene, a metal material, or a conductive polymer. The mass ratio between the negative active material, the conductive agent, the binder, and the thickener in the negative active layer is not particularly limited herein, and may be selected by a person skilled in the art as actually required, as long as the objectives of this application can be achieved. Optionally, the negative electrode plate may further include a conductive layer. The conductive layer is located between the negative current collector and the negative active layer. The constituents of the conductive layer are not particularly limited herein, and the conductive layer may be a conductive layer commonly used in the art. For example, the conductive layer includes a conductive agent and a binder. The conductive agent and binder in the conductive layer are not particularly limited herein. For example, the conductive agent and binder may be at least one of the conductive agents and binders in the negative active layer enumerated above.

The electrolyte solution includes an organic solvent and a lithium salt. The organic solvent includes a carbonate ester solvent, a carboxylate ester solvent, or a combination thereof. The carbonate ester solvent includes at least one of diethyl carbonate (DEC), dimethyl carbonate (DMC), dipropyl carbonate (DPC), methyl propyl carbonate (MPC), ethyl propyl carbonate (EPC), ethyl methyl carbonate (EMC), ethylene carbonate (EC), propylene carbonate (PC), or butylene carbonate (BC). The carboxylate ester solvent includes at least one of ethyl formate, methyl acetate, ethyl acetate, propyl acetate, methyl propionate, ethyl propionate, propyl propionate, butyl butyrate, ethyl difluoroacetate, difluoroethyl acetate, ethyl trifluoroacetate, trifluoroethyl acetate, or methyl trifluoropropionate. The lithium salt includes at least one of lithium hexafluorophosphate (LiPF$_6$), lithium bis(oxalato)borate (LiB(C$_2$O$_4$)$_2$, LiBOB), lithium difluoro(oxalato)borate (LiBF$_2$(C$_2$O$_4$), LiDFOB), lithium tetrafluoroborate (LiBF$_4$), lithium bis(fluorosulfonyl)imide (LiFSI), or lithium bis(trifluoromethylsulfonyl)imide (LiTFSI).

The electrolyte solution may further include an electrolyte solution additive. The electrolyte solution additive may include, but is not limited to, at least one of fluoroethylene carbonate (FEC), vinylene carbonate (VC), or 1,3-propane sultone (PS).

The electrochemical device of this application may include any device in which an electrochemical reaction occurs. Specific embodiments of the electrochemical device include all types of primary batteries or secondary batteries. In particular, the electrochemical device is a lithium secondary battery, including a lithium metal secondary battery, a lithium-ion secondary battery, a lithium polymer secondary battery, or a lithium-ion polymer secondary battery.

**Electronic device**

The electronic device described herein contains any one of the electrochemical devices disclosed above. The electronic devices of this application include, but are not limited to, a mobile phone, laptop computer, tablet computer, game console, unmanned aerial vehicle, electric vehicle, electric bicycle, electrical tool, or Bluetooth headset.

The implementations of this application are described below in more detail with reference to embodiments and comparative embodiments.

**Embodiment 1**

(I) Preparing a lithium-ion battery

(i) Preparing a separator

Step a: Mixing deionized water, boehmite (ceramic material), PVA (binder), and polyoxyethylene alkylphenol ether (wetting agent) at a mass ratio of 99%: 0.5%: 0.5% (excluding the deionized water as a dispersing medium); and dispersing the constituents in an agitator homogeneously enough to obtain a slurry A to be applied.

Step b: Applying the slurry A in step a onto a first surface of the separator substrate (made of polyethylene 7 $\mu$m thick) homogeneously, and oven-drying the slurry to complete preparation of a first coating layer.

Step c: Mixing deionized water, magnesium oxide (ceramic material), SBR (binder), and polyoxyethylene fatty alcohol ether (wetting agent) at a mass ratio of 98%: 1.5%: 0.5% (excluding the deionized water as a dispersing medium); and dispersing the constituents in an agitator homogeneously enough to obtain a slurry B to be applied.

Step d: Applying the slurry B in step c onto a second surface of the separator substrate homogeneously, and oven-drying the slurry to complete preparation of a second coating layer to obtain a separator. Specific parameters are set out in Table 1.

Embodiments 2 to 7 differ from Embodiment 1 in that the pore diameter $D_{50}$ and the porosity $D_1$ of the first coating layer are adjusted. Embodiments 8 to 10 differ from Embodiment 1 in that the porosity $D_2$ of the second coating layer is adjusted. Embodiments 11 to 17 differ from Embodiment 1 in that the thickness of the first coating layer is adjusted. Embodiment 18 differs from Embodiment 3 in that the ceramic particles on both sides are replaced with PPTA particles. Embodiment 19 differs from Embodiment 3 in that the ceramic particles on both sides are replaced with polyimide particles. Embodiments 20 to 25 and Embodiments 30 to 31 differ from Embodiment 8 in that the pore diameter $D'_{50}$ and the porosity $D_2$ of the second coating layer are adjusted. Embodiments 26 to 29 and Embodiment 32 differ from Embodiment 25 in that the thickness of the second coating layer is adjusted. Embodiments 34 to 37 differ from Embodiment 31 in that the values of the $D'_{50}/D_{50}$ ratio and the $D_2/D_1$ ratio are adjusted.

Comparative Embodiments 1 to 2 differ from Embodiment 1 in that the pore diameter $D_{50}$ and the porosity $D_1$ of the first coating layer are adjusted. Comparative Embodiments 3 to 4 differ from Embodiment 8 in that the porosity $D_2$ of the second coating layer is adjusted.

(ii) Preparing a positive electrode plate

Mixing lithium cobalt oxide active material (LiCoO$_2$) as a positive active material, conductive carbon black (Super-P), and a binder PVDF at a mass ratio of 97.6: 1.3: 1.1 in an N-methyl-pyrrolidone (NMP) solvent system, and stirring the mixture well in a vacuum mixer to obtain a positive electrode slurry. Applying the positive electrode slurry at a coating weight of 280 mg onto both surfaces of a 9 $\mu$m-thick aluminum foil substrate. Drying, cold-pressing, slitting, and cutting the foil successively to obtain a positive electrode plate. The thickness of the cold-pressed positive electrode plate is 95 $\mu$m.

(iii) Preparing a negative electrode plate

Mixing artificial graphite as a negative active material, acetylene black as a conductive agent, styrene-butadiene rubber (SBR) as a binder, and sodium carboxymethyl cellulose (CMC) as a thickener at a ratio of 95: 2: 2: 1, and stirring the mixture in a deionized water solvent homogeneously to obtain a slurry. Applying the slurry onto one surface of a copper foil, and oven-drying the slurry. Repeating the above steps on the other surface of the copper foil to obtain a negative electrode plate coated with a negative active layer on both sides. Performing cold-pressing and cutting to obtain a prepared negative electrode plate.

(iv) Preparing an electrolyte solution

Mixing ethylene carbonate (EC), ethyl methyl carbonate (EMC), and diethyl carbonate (DEC) at a mass ratio of 1: 1: 1, and stirring well to obtain an organic solvent. Dissolving $LiPF_6$ in the organic solvent, and then adding vinylene carbonate, and stirring well to obtain an electrolyte solution. Based on a total mass of the electrolyte solution, a mass percent of $LiPF_6$ is 12.5%, and a mass percent of the vinylene carbonate is 3%.

(v) Preparing a lithium-ion battery

Stacking the positive electrode plate, the separator, and the negative electrode plate in sequence so that the separator separates the positive electrode plate from the negative electrode plate, and then winding the stacked structure to form a bare cell. Putting the bare cell into an outer package aluminum laminated film to be sealed, baking the packaged bare cell at high temperature, injecting an electrolyte solution, and performing steps such as vacuum sealing, static standing, chemical formation, shaping, and capacity grading to obtain a lithium-ion battery.

(II) Tests of lithium-ion battery

(1) Test of the lithium-ion resistance

Testing an ionic resistance of the ceramic coating layer by electrochemical impedance spectroscopy (EIS). A specific test method is: measuring the resistance of the substrate, and then measuring the separator resistance of the ceramic coating layer (applied on both sides), and calculating a difference between the two measured values as the resistance of the ceramic coating layer.

(2) Test of normal-temperature cycle performance

Charging a lithium-ion battery at a constant current of 0.7C at 25 °C until the voltage reaches 4.5 V, and then charging the battery at a constant voltage until the current reaches 0.5C. At this time, the lithium-ion battery is in a fully charged state. Recording the charge capacity at this time as a first-cycle charge capacity. Leaving the lithium-ion battery to stand for 5 minutes, and then discharging the battery at a constant current of 0.5C until the voltage drops to 3 V, and leaving the lithium-ion battery to stand for 5 minutes, thereby completing one charge-discharge cycle. Recording the discharge capacity at this time as first-cycle discharge capacity. Charging and discharging the battery for 1000 cycles under the above conditions, and calculating the capacity retention rate of the battery at the end of the $1000^{th}$ cycle. $1000^{th}$-cycle capacity retention rate of the battery cycled at 25 °C = (current-cycle discharge capacity/first-cycle discharge capacity) $\times$ 100%.

(3) Test of high-temperature cycle performance

Charging a lithium-ion battery at a constant current of 0.7C at 45 °C until the voltage reaches 4.5 V, and then charging the battery at a constant voltage until the current reaches 0.5C. At this time, the lithium-ion battery is in a fully charged state. Recording the charge capacity at this time as a first-cycle charge capacity. Leaving the lithium-ion battery to stand for 5 minutes, and then discharging the battery at a constant current of 0.5C until the voltage drops to 3 V, and leaving the lithium-ion battery to stand for 5 minutes, thereby completing one charge-discharge cycle. Recording the discharge capacity at this time as first-cycle discharge capacity. Charging and discharging the battery for 1000 cycles under the above conditions, and calculating the capacity retention rate of the battery at the end of the $1000^{th}$ cycle. $1000^{th}$-cycle capacity retention rate of the battery cycled at 45 °C = (current-cycle discharge capacity/first-cycle discharge capacity) $\times$ 100%.

(4) Test of the low-temperature discharge performance

Charging a lithium-ion battery at a constant current of 1C until a full capacity, and then putting the lithium-ion battery into a low-temperature test chamber. Cooling down to -20 °C, discharging the battery until the voltage drops to 3 V, and then recording the discharge capacity Q of the lithium-ion battery. Recording the discharge capacity in each embodiment and each comparative embodiment. The discharge capacity in each embodiment is denoted as $Q_2$, and the discharge capacity in each comparative embodiment is denoted as $Q_1$. Low-temperature discharge performance improvement rate = $[(Q_2 - Q_1)/Q_1] \times 100\%$.

(5) Test of the heat shrink ratio of the separator

Stamping a separator to be tested into specimens by using a specified mold, each specimen being 72.5 cm long and 54.2 cm width. Placing a stamped separator specimen flat between two A4 paper sheets, and then transferring the specimen into a 150 °C oven for drying for 1 h. Taking out the dried separator specimen, and measuring the length and width, denoted as $X_1$ and $X_2$, respectively. Calculating the heat shrink ratio as:

$$\text{Machine-direction (MD) heat shrink ratio} = (72.5 - X_1)/72.5 \times 100\%;$$

$$\text{Transverse-direction (TD) heat shrink ratio} = (54.2 - X_2)/54.2 \times 100\%.$$

**Table 1**

| | First coating layer | | | Second coating layer | 25 °C 1000th-cycle capacity retention rate | 45 °C 1000th-cycle capacity retention rate |
|---|---|---|---|---|---|---|
| | Pore diameter $D_{50}$ (nm) | Porosity $D_1$ (%) | Thickness (nm) | Porosity $D_2$ (%) | | |
| Embodiment 1 | 1 | 10 | 120 | 35 | 75.5% | 80.1% |
| Embodiment 2 | 90 | 29 | 120 | 35 | 73.5% | 80.0% |
| Embodiment 3 | 25 | 20 | 120 | 35 | 85.9% | 95.5% |
| Embodiment 4 | 60 | 25 | 120 | 35 | 83.4% | 92.1% |
| Embodiment 5 | 5 | 15 | 120 | 35 | 82.1% | 91.2% |
| Embodiment 6 | 4 | 12 | 120 | 35 | 80.5% | 88.5% |
| Embodiment 7 | 65 | 27 | 120 | 35 | 80.0% | 87.3% |
| Embodiment 8 | 25 | 20 | 120 | 30 | 84.5% | 93.5% |
| Embodiment 9 | 25 | 20 | 120 | 60 | 90.5% | 97.5% |
| Embodiment 10 | 25 | 20 | 120 | 45 | 88.4% | 95.5% |
| Embodiment 11 | 25 | 20 | 20 | 35 | 80.5% | 85.5% |
| Embodiment 12 | 25 | 20 | *500* | 35 | 89.8% | 97.8% |
| Embodiment 13 | 25 | 20 | 190 | 35 | 82.5% | 95.2% |
| Embodiment 14 | 25 | 20 | 200 | 35 | 87.8% | 96.5% |
| Embodiment *15* | 25 | 20 | 120 | 35 | 81.2% | 94.0% |
| Embodiment 16 | 25 | 20 | 320 | 35 | 88.8% | 97.1% |
| Embodiment 17 | 25 | 20 | 520 | 35 | 79.5% | 84.7% |
| Embodiment 18 | 25 | 20 | 120 | 35 | 85.1% | 94% |
| Embodiment 19 | 25 | 20 | 120 | 35 | 84.9% | 93.6% |

(continued)

| | First coating layer | | | Second coating layer | 25 °C 1000th-cycle capacity retention rate | 45 °C 1000th-cycle capacity retention rate |
| | Pore diameter $D_{50}$ (nm) | Porosity $D_1$ (%) | Thickness (nm) | Porosity $D_2$ (%) | | |
| Comparative Embodiment 1 | 0.5 | 1 | 120 | 35 | 60.1% | 62.1% |
| Comparative Embodiment 2 | 100 | 30 | 120 | 35 | 70.5% | 72.5% |
| Comparative Embodiment 3 | 25 | 20 | 120 | 25 | 69% | 71.3% |
| Comparative Embodiment 4 | 25 | 20 | 120 | 65 | 68.3% | 70.6% |

As can be seen from the parameter characteristics and test data in Table 1, in this application, a dense first coating layer and a high-porosity second coating layer are disposed on the outer surfaces of the separator substrate on the two sides respectively. Therefore, the synergistic effect of the first coating layer and the second coating layer improves the cycle performance of the battery cell, especially the high-temperature cycle performance.

Specifically, as can be seen from Embodiments 1 to 7 versus Embodiments 18 to 19, by controlling the porosity $D_1$ of the first coating layer to vary within an appropriate range, the synergistic effect of the first coating layer and the second coating layer is improved, and the cycle performance of the battery cell is improved. For example, the lithium-ion battery prepared in Embodiment 3 exhibits a normal-temperature capacity retention rate of 85.9%, and a high-temperature capacity retention rate of up to 95.5%. Meanwhile, as can be seen from Embodiments 8 to 10, by further controlling the porosity $D_2$ of the second coating layer, the cycle performance of the battery cell can be further improved. For example, the lithium-ion battery prepared in Embodiment 9 exhibits a normal-temperature capacity retention rate of up to 90.5%, and a high-temperature capacity retention rate of up to 97.5%.

As can be seen from Embodiments 11 to 17 versus Embodiment 3, by further controlling the thickness of the first coating layer, the cycle performance of the battery cell can be further improved. For example, the lithium-ion battery prepared in Embodiment 12 exhibits a normal-temperature capacity retention rate of up to 89.8%, and a high-temperature capacity retention rate of up to 97.8%.

As can be seen from Comparative Embodiments 1 to 4 versus Embodiment 3, the porosity of the first coating layer in Comparative Embodiments 1 and 2 falls outside the appropriate range, and the porosity of the second coating layer in Comparative Embodiments 3 and 4 falls outside the appropriate range, so that the battery cell exhibits inferior normal- and high-temperature cycle performance.

**Table 2**

| | First coating layer | | | Second coating layer | | | Sum of ionic resistances ($\Omega$) | Low-temperature discharge performance improvement rate (%) |
| | Pore diameter $D_{50}$ (nm) | Porosity $D_1$ (%) | Thickness (nm) | Pore diameter $D'_{50}$ (nm) | Porosity $D_2$ (%) | Thickness (nm) | | |
| Embodiment 8 | 25 | 20 | 120 | 100 | 30 | 500 | 0.015 | 7.1% |
| Embodiment 20 | 25 | 20 | 120 | 150 | 40 | 500 | 0.01 | 7.5% |
| Embodiment 21 | 25 | 20 | 120 | 300 | 50 | 500 | 0.006 | 7.9% |
| Embodiment 22 | 25 | 20 | 120 | 500 | 60 | 500 | 0.014 | 7.1% |
| Embodiment 23 | 25 | 20 | 120 | 140 | 38 | 500 | 0.013 | 7.2% |
| Embodiment 24 | 25 | 20 | 120 | 320 | 53 | 500 | 0.003 | 7.6% |

(continued)

| | First coating layer | | | Second coating layer | | | Sum of ionic resistances ($\Omega$) | Low-temperature discharge performance improvement rate (%) |
|---|---|---|---|---|---|---|---|---|
| | Pore diameter $D_{50}$ (nm) | Porosity $D_1$ (%) | Thickness (nm) | Pore diameter $D'_{50}$ (nm) | Porosity $D_2$ (%) | Thickness (nm) | | |
| Embodiment 25 | 25 | 20 | 120 | 200 | 45 | 500 | 0.001 | 9.0% |
| Embodiment 26 | 25 | 20 | 120 | 200 | 45 | 700 | 0.002 | 8.8% |
| Embodiment 27 | 25 | 20 | 120 | 200 | 45 | 1000 | 0.005 | 8.0% |
| Embodiment 28 | 25 | 20 | 120 | 200 | 45 | 1200 | 0.008 | 7.6% |
| Embodiment 29 | 25 | 20 | 120 | 200 | 45 | 2000 | 0.012 | 7.2% |
| Embodiment 30 | 25 | 20 | 120 | 90 | 29 | 500 | 0.018 | 6.8% |
| Embodiment 31 | 25 | 20 | 120 | 550 | 63 | 500 | 0.017 | 6.5% |
| Embodiment 32 | 25 | 20 | 120 | 200 | 45 | 2100 | 0.014 | 7.1% |

As can be seen from the parameter characteristics and test data in Table 2, when the pore diameter $D'_{50}$, porosity $D_2$, and the sum of the lithium-ion resistances of the second coating layer are controlled to fall within appropriate ranges, the low-temperature discharge performance of the battery cell is improved. For example, for the lithium-ion battery prepared in Embodiment 25, the improvement rate of the low-temperature discharge performance is up to 9.0%. As can be seen from Embodiments 25 to 29 versus Embodiments 32 and 25, a further increase in the thickness of the second coating layer deteriorates the low-temperature discharge performance.

**Table 3**

| | First coating layer | | Second coating layer | | $D'_{50}/D_{50}$ | $D_2/D_1$ | MD heat shrink ratio (%) | TD heat shrink ratio (%) |
|---|---|---|---|---|---|---|---|---|
| | Pore diameter $D_{50}$ (nm) | Porosity $D_1$ (%) | Pore diameter $D'_{50}$ (nm) | Porosity $D_2$ (%) | | | | |
| Embodiment 33 | 8 | 18 | 160 | 42 | 20 | 2.3 | 3.4% | 3.7% |
| Embodiment 34 | 8 | 18 | 480 | 58 | 60 | 3.2 | 3.6% | 4.0% |
| Embodiment 35 | 8 | 18 | 320 | 53 | 40 | 2.9 | 3.0% | 3.1% |
| Embodiment 36 | 8 | 18 | 496 | 59 | 62 | 3.27 | 8.5% | 8.2% |
| Embodiment 37 | 8 | 18 | 120 | 36 | 15 | 2 | 7.5% | 7.8% |

As can be seen from the parameter characteristics and test data in Table 3, the heat resistance of the separator is improved by synergistically controlling the porosity ratio and the pore diameter ratio between the first coating layer and the second coating layer to fall within appropriate ranges.

The foregoing descriptions are merely exemplary embodiments of this application, but are not intended to limit this application. Any modifications, equivalent substitutions, and improvements made without departing from the spirit and principles of this application still fall within the protection scope of this application.

**Claims**

1. A separator, **characterized in that**, the separator comprises a separator substrate, a first coating layer, and a second coating layer;

   the separator substrate comprises a first surface and a second surface disposed opposite to each other, the first surface is configured to face a positive electrode, and the second surface is configured to face a negative electrode;
   the first coating layer is disposed on the first surface, and the second coating layer is disposed on the second surface;
   the first coating layer is a solid filler coating, and a porosity of the first coating layer is denoted as $D_1$, satisfying: $10\% \leq D_1 < 30\%$; and
   the second coating layer is a solid filler coating, and a porosity of the second coating layer is denoted as $D_2$, satisfying: $30\% \leq D_2 \leq 60\%$.

2. The separator according to claim 1, **characterized in that** the separator satisfies at least one of the following conditions:

   condition I: a pore diameter $D_{50}$ of the first coating layer is 1 nm to 90 nm;
   condition II: a thickness of the first coating layer is 20 nm to 500 nm; or

   $$\text{condition III: } 15\% \leq D_1 \leq 25\%.$$

3. The separator according to claim 2, **characterized in that** the separator satisfies at least one of the following conditions:

   condition i: a pore diameter $D_{50}$ of the first coating layer is 5 nm to 60 nm; or
   condition ii: a thickness of the first coating layer is 200 nm to 500 nm.

4. The separator according to claim 2, **characterized in that** the separator satisfies at least one of the following conditions:

   condition A: a pore diameter $D'_{50}$ of the second coating layer is 100 nm to 500 nm;
   condition B: a thickness of the second coating layer is 0.5 $\mu$m to 2 $\mu$m; or

   $$\text{condition C: } 40\% \leq D_2 \leq 50\%.$$

5. The separator according to claim 4, **characterized in that** the separator satisfies at least one of the following conditions:

   condition a: a pore diameter $D'_{50}$ of the second coating layer is 150 nm to 300 nm; or
   condition b: a thickness of the second coating layer is 0.5 $\mu$m to 1 $\mu$m.

6. The separator according to any one of claims 1 to 5, **characterized in that** a sum of lithium-ion resistances of the first coating layer and the second coating layer is 0.001 $\Omega$ to 0.015 $\Omega$.

7. The separator according to claim 6, **characterized in that** a sum of lithium-ion resistances of the first coating layer and the second coating layer is 0.001 $\Omega$ to 0.01 $\Omega$.

8. The separator according to claim 4, **characterized in that** the separator satisfies:

   $$(1)\ 20 \leq D'_{50}/D_{50} \leq 60;$$

   and/or

$$(2)\ 2.3 \le D_2/D_1 \le 3.2.$$

9. An electrochemical device, **characterized in that** the electrochemical device comprises a positive electrode plate, a negative electrode plate, and a separator disposed between the positive electrode plate and the negative electrode plate; and
the separator is the separator according to any one of claims 1 to 8.

10. An electronic device, **characterized in that** the electronic device comprises the electrochemical device according to claim 9.

FIG. 1

## INTERNATIONAL SEARCH REPORT

| International application No. |
| --- |
| **PCT/CN2024/091477** |

| **A.** | **CLASSIFICATION OF SUBJECT MATTER** |
| --- | --- |

H01M50/457(2021.01)i; H01M50/491(2021.01)i; H01M10/0525(2010.01)i

According to International Patent Classification (IPC) or to both national classification and IPC

| **B.** | **FIELDS SEARCHED** |
| --- | --- |

Minimum documentation searched (classification system followed by classification symbols)

IPC:H01M50/-; H01M10/-

Documentation searched other than minimum documentation to the extent that such documents are included in the fields searched

Electronic data base consulted during the international search (name of data base and, where practicable, search terms used)

CNABS, CNTXT, ENTXTC, OETXT, VEN, WPABSC, CNKI, ISI Web of Science: 第二涂层, 第一涂层, 电池, 隔膜, 孔隙率, membrane, coating, first, second, substrate, electrode

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 116315459 A (NINGDE AMPEREX TECHNOLOGY LTD.) 23 June 2023 (2023-06-23) claims 1-10 | 1-10 |
| X | CN 107316968 A (DONGGUAN SAIPUKE ELECTRONIC TECHNOLOGY CO., LTD.) 03 November 2017 (2017-11-03) description, paragraphs 3-95, and figures 1-4 | 1-5, 9-10 |
| A | CN 104600240 A (LG CHEMICAL LTD.) 06 May 2015 (2015-05-06) entire document | 1-10 |
| A | CN 112635916 A (NINGDE ZHUOGAO NEW MATERIAL TECHNOLOGY CO., LTD.) 09 April 2021 (2021-04-09) entire document | 1-10 |
| A | KR 20220004283 A (SK INNOVATION CO., LTD.) 11 January 2022 (2022-01-11) entire document | 1-10 |
| A | WO 2022205163 A1 (NINGDE AMPEREX TECHNOLOGY LTD.) 06 October 2022 (2022-10-06) entire document | 1-10 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 July 2024** | **16 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091477**

| Patent document cited in search report | | | Publication date (day/month/year) | Patent family member(s) | | | Publication date (day/month/year) |
|---|---|---|---|---|---|---|---|
| CN | 116315459 | A | 23 June 2023 | None | | | |
| CN | 107316968 | A | 03 November 2017 | None | | | |
| CN | 104600240 | A | 06 May 2015 | WO | 2015065118 | A1 | 07 May 2015 |
| | | | | EP | 2996188 | A1 | 16 March 2016 |
| | | | | EP | 2996188 | A4 | 22 June 2016 |
| | | | | EP | 2996188 | B1 | 19 September 2018 |
| | | | | KR | 20150050505 | A | 08 May 2015 |
| | | | | KR | 101618317 | B1 | 04 May 2016 |
| | | | | JP | 2016535401 | A | 10 November 2016 |
| | | | | JP | 6390037 | B2 | 19 September 2018 |
| | | | | US | 2016028064 | A1 | 28 January 2016 |
| | | | | US | 9786891 | B2 | 10 October 2017 |
| | | | | PL | 2996188 | T3 | 28 June 2019 |
| CN | 112635916 | A | 09 April 2021 | None | | | |
| KR | 20220004283 | A | 11 January 2022 | None | | | |
| WO | 2022205163 | A1 | 06 October 2022 | BR | 112023019956 | A2 | 14 November 2023 |
| | | | | JP | 2024510512 | A | 07 March 2024 |
| | | | | EP | 4318778 | A1 | 07 February 2024 |
| | | | | KR | 20230141893 | A | 10 October 2023 |
| | | | | US | 2024030551 | A1 | 25 January 2024 |

Form PCT/ISA/210 (patent family annex) (July 2022)